# FASCICULE DE BREVET EUROPEEN

(11) **EP 1 675 129 B1**
(45) Date de publication et mention de la délivrance du brevet: **07.05.2008**
(21) Numéro de dépôt: 05292772.0
(22) Date de dépôt: 22.12.2005
(51) Int. Cl.: H01B 1/24, C08L 27/18

(54) **Matériau électriquement conducteur à base de polymère fluoré et procédé de fabrication d'un tel matériau**
Elektrisch leitendes Material auf Basis eines fluorierten Polymers sowie dessen Herstellungsverfahren
Electrically conductive material based on fluoropolymers and method of producing the same

(30) Priorité: 22.12.2004 FR 0413765
(43) Date de publication de la demande: 28.06.2006
(73) Titulaire: COMPAGNIE PLASTIC OMNIUM, 69007 Lyon (FR)
(72) Inventeur: Cade, David, 52200 Langres (FR)
(74) Mandataire: Remy, Vincent Noel Paul

(56) Documents cités:
- EP-A- 0 860 834
- FR-A- 2 336 021
- US-A- 4 559 254
- DATABASE WPI Section Ch, Week 198332 Derwent Publications Ltd., London, GB; Class A85, AN 1983-732672 XP002336055 & JP 58 112712 A (GUNZE KK) 5 juillet 1983 (1983-07-05)

## Description

La présente invention a pour objet un matériau conducteur à base de polymère fluoré, notamment de polytétrafluoroéthylène (PTFE), et un procédé de fabrication d'un tel matériau.

Habituellement, un ruban à base de PTFE peut contenu ou non une charge.

Dans le cas d'un ruban de PTFE vierge, la résistivité de surface est d'environ 10¹⁷ ohm/carré, le ruban étant alors totalement électriquement isolant.

Il est par ailleurs connu de réaliser un ruban à base de PTFE chargé avec du graphite. Ce type de ruban présente une conductivité électrique relativement médiocre.

La présente invention vise notamment à fournir un matériau, notamment sous la forme d'un ruban, à base de polymère fluoré, notamment de PTFE, qui présente des propriétés de conductivité électrique améliorées.

L'invention a ainsi pour objet un matériau, notamment extrudé, par exemple sous la forme d'un ruban ou un jonc cylindrique, le matériau étant électriquement conducteur, à base de polymère fluoré, notamment de PTFE, et contenant une charge conductrice à base de carbone choisie parmi : des nanotubes et des nanofibres de carbone.

Au sens de la présente invention, on entend par « nanotubes » et « nanofibres » des structures ayant un diamètre compris entre 1 et 10⁴ nm, avec un rapport longueur/diamètre élevé, par exemple supérieur à 100.

Un tel matériau selon l'invention, avec une proportion appropriée de charge conductrice de carbone, présente des propriétés de conductivité électrique améliorées.

Lorsque la charge contient du noir de carbone, la proportion, en poids, de la charge conductrice dans le matériau est par exemple comprise sensiblement entre 2% et 8 %, de préférence entre 3 % et 6 %, le PTFE se présentant sous forme de poudre fine.

Lorsque la charge contient des nanotubes ou nanofibres de carbone et le PTFE se présente sous forme de poudre fine. la proportion en poids de la charge conductrice dans le matériau est par exemple comprise sensiblement entre 0,5 % et 10 %.

Avantageusement, la proportion de charge conductrice de carbone dans le matériau est choisie de manière à obtenir un matériau présentant une résistivité de surface sensiblement inférieure à 10⁸ ohm/carré, par exemple inférieure à 10⁵ ohm/carré, étant par exemple d'environ 10³ ohm/curré.

Dans un exemple de mise en oeuvre de l'invention, le matériau présente une structure monocouche.

L'invention a encore pour objet un procédé de fabrication d'un matériau, notamment sous la forme d'un ruban ou un jonc cylindrique, conducteur, à base de polymère fluoré, notamment de PTFE, le procédé comportant les étapes suivantes :
- fournir un mélange contenant un polymère fluoré, notamment du PTFE, de préférence sous forme de poudre fine, et une charge conductrice à base de carbone choisie parmi : du noir de carbone, des nanotubes et des nanofibres de carbone,
- former le matériau par extrusion lubrifiée du mélange.

La société déposante a constaté que l'extrusion lubrifiée appliquée à un mélange de PTFE avec une charge conductrice à base de carbone selon l'invention, dans des proportions appropriées en fonction notamment du grade du polymère fluoré, permet d'assurer, d'une part, des conditions d'extrusion satisfaisantes et, d'autre part, l'obtention d'un matériau présentant des propriétés électriques améliorées, en particulier une conductivité électrique relativement élevée, notamment plus élevée que la conductivité électrique d'un ruban de PTFE chargé avec du graphite.

Le PTFE dans le mélange est non fritté.

Dans un exemple comparatif on utilise comme charge du noir de carbone et la proportion, en poids, de la charge conductrice dans le mélange est par exemple comprise sensiblement entre 2 % et 8 %, de préférence entre 3% et 6 % pour du PTFE se présentant sous forme de poudre fine.

Dans un exemple de mise en oeuvre de l'invention, l'extrusion est réalisée à l'aide d'une filière choisie pour obtenir à sa sortie un ruban extrudé avec une épaisseur comprise entre 30 et 500 µm, par exemple d'environ 100 µm.

Le procédé peut comporter l'une au moins des étapes suivantes :
- soumettre le matériau extrudé à un calandrage.
- éliminer par séchage le lubrifiant dans le matériau extrudé,
- soumettre le matériau extrudé à une cuisson, par exemple lors de l'élimination du lubrifiant
- éventuellement dédensifier le matériau extrudé, notamment par étirage.

L'invention pourra être mieux comprise à la lecture de la description détaillée qui va suivre, d'exemples de mise en oeuvre non limitatifs de celle-ci, et à l'examen du dessin annexé, sur lequel :
- la figure 1 représente, schématiquement et partiellement, des étapes d'un procédé de fabrication d'un ruban conforme à l'invention, et
- la figure 2 illustre, schématiquement et partiellement, une étape de dédensification d'un ruban.

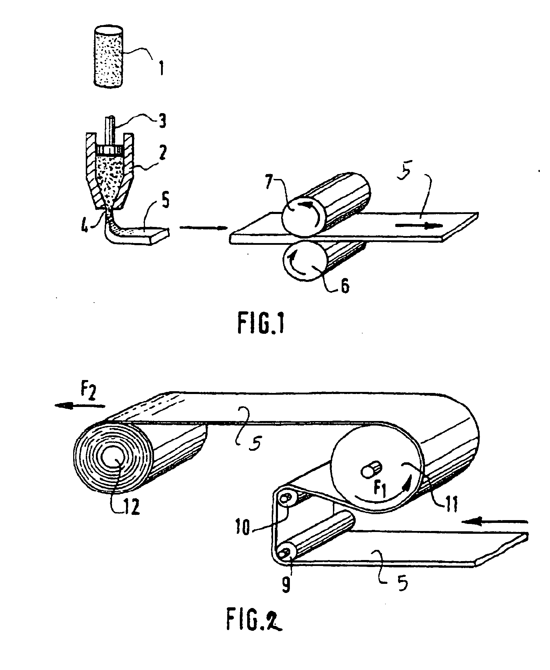

On va d'abord décrire en référence aux figures 1 et 2 différentes étapes d'un procédé de fabrication d'un matériau conducteur à base de PTFE conforme à l'invention.

On commence par préparer une préforme 1, par exemple de forme cylindrique, obtenue par compactage d'un mélange de PTFE non fritté, en poudre fine et de lubrifiant, incorporant également une charge conductrice à base de carbone.

La préforme 1 est introduite dans une presse de filage 2 dans laquelle un piston 3 refoule le mélange à travers une filière 4.

Dans l'exemple considéré, la filière 4, comportant notamment une fente, est choisie de manière à obtenir à sa sortie un matériau sous la forme d'un ruban plat 5 ayant une épaisseur comprise entre 30 et 500 µm, par exemple d'environ 100 µm.

La filière peut, en variante, être agencée pour permettre l'extrusion d'un jonc cylindrique.

Le ruban extrudé 5 peut ensuite être amené entre deux cylindres de calandrage 6 et 7 afin de réduire son épaisseur.

Dans une étape non illustrée, le ruban 5 est séché pour éliminer le lubrifiant.

Optionnellement, la densité du ruban 5 peut encore être réduite dans une étape illustrée à la figure 2, consistant à dédensifier ce ruban 5.

Durant cette étape, le ruban 5 est amené, par l'intermédiaire de rouleaux de renvoi 9, 10, sur un tambour 11 entraîné en rotation autour de son axe dans le sens de la flèche F₁.

Lorsque cela est nécessaire, le tambour 11 comporte un dispositif de chauffage permettant de maintenir sa surface extérieure à une température constante réglable.

Après passage sur le tambour 11, le ruban 5 peut être enroulé sur un noyau 12 associé à un dispositif d'entraînement non représenté, agencé pour que l'effort de traction F₂ exercé sur le ruban puisse être réglé à volonté.

On va maintenant décrire des exemples de mise en oeuvre du procédé selon l'invention.

### Exemple 1 comparatif

Le mélange à extruder contient :
- Poudre de PTFE cru naturel 100 parties en poids.
- Noir de carbone : 5 parties en poids,
- Lubrifiant Isopar (marque déposée) : entre 25 et 30 parties en poids.

La pression d'extrusion est de l'ordre de 40 à 100 bars.

La température d'extrusion est comprise entre 30 et 50 °C.

Le ruban 5 obtenu présente une épaisseur d'environ 100 µm, une densité d'environ 1,5 , et une résistivité de surface d'environ 10⁵ ohm/carré.

### Exemple 2 :

Le mélange à extruder contient :
- Poudre de PTFE cru naturel : 100 parties en poids,
- Charge à base de nanotubes de carbone : 0,5 partie en poids,
- Lubrifiant Isopar (marque déposée) : 25 parties en poids.

### Exemple 3 :

Le mélange à extruder contient :
- Poudre de PTFE cru naturel : 100 parties en poids,
- Charge à base de nanofibres de carbone : 1 partie en poids,
- Lubrifiant Isopar (marque déposée) : 25 parties en poids.

Bien entendu, il est possihle d'utiliser tout autre lubrifiant approprié autre que celui indiqué dans les exemples ci-dessus

## Revendications

1. Matériau, notamment extrudé, sous la forme d'un ruban (5) ou un jonc cylindrique, le matériau étant électriquement conducteur, à base de polymère fluoré, notamment de PTFE, et contenant une charge conductrice à base de carbone choisie parmi : des nanotubes et des nanofibres de carbone.

2. Matériau selon la revendication 1, la charge contenant des nanotubes de carbone, **caractérisé par le fait que** la proportion, en poids, de la charge conductrice à base de carbone dans le matériau est comprise sensiblement entre 0,5 % et 10 %, lorsque le mélange contient du PTFE sous forme de poudre fine.

3. Matériau selon la revendication 1, la charge contenant des nanofibres de carbone, **caractérisé par le fait que** la proportion, en poids, de la charge conductrice à base de carbone dans le matériau est comprise sensiblement entre 0,5 % et 10 %, lorsque le mélange contient du PTFE sous forme de poudre fine.

4. Matériau selon l'une quelconque des revendications précédentes, **caractérise par le fait que** la proportion de charge conductrice de carbone dans le matériau est choisie de manière à obtenir un matériau présentant une résistivité de surface sensiblement inférieure à 10⁸ ohm/carré, par exemple inférieure à 10⁵ ohm/carré. étant par exemple d'environ 10³ ohm/carré.

5. Matériau selon l'une quelconque des revendications précédentes, **caractérisé par le fait qu**'il présente une structure monocouche.

6. Procédé de fabrication d'un matériau sous la forme d'un ruban ou un jonc cylindrique, conducteur, à base de polymère fluoré, notamment de PTPE, le procédé comportant les étapes suivantes:
- fournir un mélange contenant un polymère fluoré, notamment du PTFE, et une charge conductrice à base de carbone choisie parmi: des nanotubes et des nanofibres de carbone,
- former le matériau par extension lubrifiée du mélange.

7. Procédé selon la revendication 6, **caractérisé pur le fait que** le mélange contient du PTFE sous forme de poudre fine.

8. Procédé selon la revendication 6 ou 7, l'extrusion étant réalisée à l'aide d'une filière choisie pour obtenir à sa sortie un ruban extrudé avec une épaisseur comprise entre 30 et 500 µm, par exemple d'environ 100 µm.

9. Procédé selon l'une quelconque des revendications 6 à 8, **caractérisé par le fait qu**'il comporte l'une au moins des étapes suivantes:
- soumettre le matériau extrudé à un calandrage,
- éliminer le lubrifiant dans le matériau extrudé,
- soumettre le matériau extrudé à une cuisson, par exemple lors de l'élimination du lubrifiant,
- éventuellement dédensifier le matériau extrudé, notamment par étirage.

## Claims

1. Material in the form of a tape (5) or a cylindrical rod, in particular extruded material, the material being electrically conductive, based on a fluoro-polymer, in particular PTFE, and containing a conductive filler based on carbon selected from: carbon nanotubes and nanofibers.

2. A material according to claim 1, the filler containing carbon nanotubes, the material being **characterized by** the fact that the proportion by weight of the carbon-based conductive filler in the material lies substantially in the range 0.5% to 10% when the mixture containing PTFE is in the form of a fine powder.

3. A material according to claim 1, the filler containing carbon nanofibers, the material being **characterized by** the fact that the proportion by weight of the carbon-based conductive filler in the material lies substantially in the range 0.5% to 10% when the mixture containing PTFE is in the form of a fine powder.

4. A material according to any preceding claim, **characterized by** the fact that the proportion of the carbon-based conductive filler in the material is selected in such a manner as to obtain a material presenting surface resistivity substantially less than 10⁸ ohms per square, e.g. less than 10⁵ ohms per square, e.g. being about 10³ ohms per square.

5. A material according to any preceding claim, **characterized by** the fact that it presents a single-layer structure.

6. A method of fabricating a material in the form of a tape or a cylindrical rod that is conductive, and based on a fluoro-polymer, in particular PTFE, the method comprising the following steps:
· providing a mixture containing a fluoro-polymer, in particular PTFE, and a conductive filler based on carbon selected from: carbon nanotubes and nanofibers; and
· forming the material by lubricated extrusion of the mixture.

7. A method according to claim 6, **characterized by** the fact that the mixture contains PTFE in fine powder form.

8. A method according to claim 6 or claim 7, the extrusion being performed by a die selected to obtain at an outlet thereof an extruded tape of thickness lying in the range 30 µm to 500 µm, e.g. about 100 µm.

9. A method according to any one of claims 6 to 8, **characterized by** the fact that it includes at least one of the following steps:
· subjecting the extruded material to calendaring;
· eliminating the lubricant from the extruded material;
· subjecting the extruded material to baking, e.g. while eliminating the lubricant; and
· optionally reducing the density of the extruded material, in particular by stretching.

## Patentansprüche

1. Material, insbesondere extrudierter Art, auf Basis von fluoriertem Polymer, insbesondere von PTFE, in Form eines Bandes (5) oder eines zylindrischen Rohres, wobei das Material elektrisch leitfähig ist und einen leitfähigen Füllstoff auf Basis von Kohlenstoff enthält, der aus Folgendem gewählt ist: Nanoröhren und Nanofasern aus Kohlenstoff.

2. Material gemäß dem Anspruch 1, wobei der Füllstoff Nanoröhren aus Kohlenstoff enthält, **dadurch gekennzeichnet, dass** der Gewichtsanteil des leitfähigen Füllstoffs auf Basis von Kohlenstoff in dem Material im Wesentlichen zwischen 0,5 % und 10 % beträgt, wenn die Mischung PTFE in Form von feinem Pulver enthält.

3. Material gemäß dem Anspruch 1, wobei der Füllstoff Nanofasern aus Kohlenstoff enthält, **dadurch gekennzeichnet, dass** der Gewichtsanteil des leitfähigen Füllstoffs auf Basis von Kohlenstoff in dem Material im Wesentlichen zwischen 0,5 % und 10 % beträgt, wenn die Mischung PTFE in Form von feinem Pulver enthält.

4. Material gemäß einem beliebigen der vorhergehenden Ansprüche, **dadurch gekennzeichnet, dass** der Anteil des leitfähigen Kohlenstofffüllstoffs in dem Material derart gewählt ist, dass ein Material erhalten wird, welches einen spezifischen Oberflächenwiderstand aufweist, der deutlich geringer als 10⁸ Ohm/Quadrat, beispielsweise geringer als 10⁵ Ohm/Quadrat, ist und zum Beispiel ungefähr 10³ Ohm/Quadrat beträgt.

5. Material gemäß einem beliebigen der vorhergehenden Ansprüche, **dadurch gekennzeichnet, dass** es eine Monolagen-Struktur aufweist.

6. Herstellungsverfahren für ein leitfähiges Material auf Basis von fluoriertem Polymer, insbesondere von PTFE, in Form eines Bandes oder eines zylindrischen Rohres, wobei das Verfahren die folgenden Schritte aufweist:
- Bereitstellen einer Mischung, die ein fluoriertes Polymer, insbesondere PTFE, enthält sowie einen leitfähigen Füllstoff auf Basis von Kohlenstoff, der aus Folgendem gewählt ist: Nanoröhren und Nanofasern aus Kohlenstoff.
- Bilden des Materials, indem die Mischung unter Schmiermitteleinsatz extrudiert wird.

7. Verfahren gemäß dem Anspruch 6, **dadurch gekennzeichnet, dass** die Mischung PTFE in Form von feinem Pulver enthält.

8. Verfahren gemäß Anspruch 6 oder 7, wobei die Extrusion mit Hilfe einer Düse durchgeführt wird, die derart gewählt ist, dass an ihrer Austrittsöffnung ein extrudiertes Band erhalten wird, dessen Dicke zwischen 30 und 500 µm liegt und beispielsweise ungefähr 100 µm beträgt.

9. Verfahren gemäß einem beliebigen der Ansprüche 6 bis 8, **dadurch gekennzeichnet, dass** es mindestens einen der folgenden Schritte aufweist:
- Kalandrieren des extrudierten Werkstoffs,
- Entfernen des Schmiermittels in dem extrudierten Werkstoff,
- Erhitzen des extrudierten Werkstoffs, beispielsweise beim Entfernen des Schmiermittels,
- möglicherweise Verringern der Dichte des extrudierten Werkstoffs, insbesondere durch Strecken.
